# EUROPEAN PATENT SPECIFICATION

(11) **EP 2 905 550 B1**
(45) Date of publication and mention of the grant of the patent: **04.04.2018**
(21) Application number: 14200237.7
(22) Date of filing: 23.12.2014
(51) Int. Cl.: F24F 3/14, F24F 5/00, F24F 12/00

(54) **System for air treatment of a building**
System zur Luftbehandlung eines Gebäudes
Système de traitement de l'air d'un bâtiment

(30) Priority: 23.12.2013 NL 2012019
(43) Date of publication of application: 12.08.2015
(73) Proprietor: Dutch Innovation in Air Treatment BV, 8441 PK Heerenveen (NL)
(72) Inventor: Van der Lee, Arthur, 8334 NE Tuk (NL)
(74) Representative: Cramwinckel, Michiel

(56) References cited:
- WO-A1-2012/087139
- WO-A1-2013/021147
- DE-U1- 29 808 861
- US-A- 6 018 953

## Description

The invention relates to a system for air treatment of a building, as well as to a building with an air treatment system. In particular, the invention relates to an air treatment system for a building including a drying device for the dehumidificaftion of air coming from outside of the building and an indirect evaporative cooler for cooling the dehumidified air. Such an air treatment system on its own is known. An advantage of such a system that uses an indirect evaporative cooler for cooling the air, is for example that such a system can use less energy than another type of air treatment system and that no harmful coolants are used. A disadvantage is however that a large amount of air is needed to create a sufficient cooling capacity, whereby relatively large air ducts are needed for supplying the cooled air to the different spaces of the building, which air ducts furthermore often need to be insulated. Furthermore the air from the building also needs to be transported back to the indirect evaporative cooler through likewise relatively large air ducts. Therefore the known air treatment system has practical limitations, wherein it often is only applied for buildings of a certain maximum volume. A goal of the invention is to at least partly overcome this above-described disadvantage of the air treatment system. In particular, a goal of the invention is to provide an air treatment system, which can cool a building of any volume, or at least a larger volume than with the known air treatment system, well and/or efficient and/or with relatively low energy consumption. An air treatment device according to the preamble of claim 1 is known from document WO 2013/021147 A1. Hereto the invention relates to an air treatment system for a building, comprising:
at least two indirect evaporative coolers, each indirect evaporative cooler is comprised of two air channels separated from each other by a transfer wall, wherein a first air channel is a cooling channel and wherein a second channel is an evaporating channel, and wherein each indirect evaporative cooler has means for wetting the side of the transfer wall directed towards the evaporating channel, wherein the air treatment system further comprises an air handling equipment with a drying device for the dehumidification of air coming from outside of the building, wherein the at least two indirect evaporative coolers are positioned locally in separate, mutually closable, spaces of the building and wherein each of the indirect evaporative coolers is connected in parallel to each other to the air handling equipment.

According to the invention, the air handling equipment is a central, general equipment, which can be positioned at any suitable location in or on the building, wherein a number of indirect evaporative coolers are positioned locally in the building, each of which are connected to the collective, general air handling equipment. By locally it is meant that the at least two indirect evaporative coolers are positioned in separate, preferably mutually closable spaces. This allows for each space to be cooled locally and especially separately from each other. The space may also alternatively be referred to as zone. Therefore the taking in of fresh outside air and the dehumidification thereof can be carried out generally for the whole building, while the cooling can be carried out locally for each closable space.

This offers at least one of the following advantages over the known system, in which also the cooling is carried out generally for the whole building, being:
- maintenance of the air handling equipment can be carried out centrally;
- the supply air ducts for supplying the dehumidified air to the local indirect evaporative coolers does not need to be insulated;
- the supply air ducts can be relatively small;
- return air ducts to the air handling equipment are not necessary;
- each indirect evaporative cooler can be a relatively small version, wherein also the size of the central air handling equipment can be reduced because it does not have to accommodate a relatively large indirect evaporative cooler;
- the location of the indirect evaporative cooler can be chosen as desired;
- the total capacity/power of the sum of all the local indirect evaporative coolers can be relatively large, compared to coolers applied generally for the building, and
- the degree of cooling can be chosen locally.

It is noted that, with the term building is implied a number of physically connected, but mutually closable spaces. In particular, the separate spaces are mutually closed from any flowing medium, such that no air flows from one space to the other space can take place. The spaces can be both permanently mutually closed and not-permanently, wherein closing can for example take place with windows or doors. For example this can be a building with a number of, by a door closable rooms, wherein the rooms are the spaces. Alternatively or additionally this can be a building with a number of floors, wherein each floor be defined as a space. Each by a floor defined space can include whether or not closable rooms, such that each space can again comprise multiple spaces. The closable rooms in a space can if desired also contain one joint indirect evaporative cooler. In that case, the closable rooms are not separate spaces in the meaning of this patent, but they form one space together. Yet again alternatively the building can comprise a number of separate sub-buildings, mutually physically connected, for example by means of the system of the invention. This could for example be a holiday village. In this case the sub-buildings could be the spaces. The sub-buildings can if desired contain closable rooms, such that a number of spaces per space are formed. Evident from this, is that the term building needs to be interpreted in a broad sense of the word, wherein the different possible varieties are evident to the expert.

It is noted that, the air handling equipment can if desired comprise multiple devices or functionalities, such as for example an air filter for filtering the outside air and/or one or more indirect evaporative coolers which can be positioned upstream and/or downstream of the drying device. Hereby central, general cooling can take place in the air handling equipment, alongside the local cooling in the locally positioned indirect evaporative coolers. An indirect evaporative cooler positioned upstream of the dryer has the advantage that the airstream supplied to the drying device will have a higher relative humidity, which can cause an increase in the efficiency of the drying equipment. This is in accordance with the insight of the applicant, that the efficiency of the drying device can increase with the relative humidity of the air stream. An indirect evaporative cooler positioned downstream of the drying device has the advantage that the air can be cooled centrally before being transported to the various local indirect evaporative coolers, allowing the indirect evaporative coolers to be relatively small, or to be able to cool to a lower temperature, because of a lower enthalpy of the airstream.

In an embodiment of the air treatment system according to the invention, each indirect evaporative cooler includes an air intake section for taking in air from the building. In another embodiment of the air treatment system according to the invention, the drying device of the air handling equipment is connected for medium throughflow to an inflow opening of the evaporating channel of an or each indirect evaporative cooler, wherein the air intake section is connected for medium throughflow with an inflow opening of the cooling channel of that or each indirect evaporative cooler. This way the fresh outdoor air is used for cooling of an airstream in the cooling channel, by the evaporating of moist in the evaporating channel. In this case, the air in the cooling channel is air from the building. Such an embodiment of the system according to the invention can for example be suitable for a sterile building or a sterile space thereof in which no air from outside can be supplied, and where cooling through recirculation takes place. Recirculation of air is possible in the system according to the invention because the air is reused locally, and thus per separate, mutually closable space. Because the spaces are mutually closable and are cooled separately from each other by their own indirect evaporative cooler, there is no air supplied from one space to another space, wherein possible bacteria or other contaminants would be transported to the other space. The fresh air is discharged to outside after leaving the evaporating channel. The discharging of the moist air can take place both locally as well as through a joint discharge channel.

In yet another embodiment of the air treatment system according to the invention, the drying device of the air handling equipment is connected for medium throughflow to an inflow opening of the cooling channel of an or each indirect evaporative cooler, wherein the air intake section is connected for medium throughflow to an inflow opening of the evaporating channel of that or each indirect evaporative cooler. In such an embodiment air from the building will be supplied to the evaporating channel for the evaporating of the moist on the transfer wall, to be able to cool the fresh air in the cooling channel. The cooled fresh air is then supplied locally to the building, while the moist air from the evaporating channel can be discharged to outside. The discharging of the moist air can take place both locally as well as through a joint discharge channel. Such an embodiment of the system according to the invention is suitable when it is desired to supply fresh air to a building or a space thereof. Another advantage of this embodiment is that, when the means for wetting are switched off at least temporarily, so that the transfer wall is not moist, the indirect evaporative cooler functions as a heat exchanger for heat recovery. This can be applied advantageously when the temperature of the outdoor air is colder than the temperature in the building, such that relatively warm air from the building that is supplied to the evaporating channel, will heat the outside air in the cooling channel, in order to recover heat from the air from the building. This can be controlled advantageously with control means for controlling the wetting means of each indirect evaporative cooler independently from each other. Depending on the function of a space in a building, it is possible to choose for each indirect evaporative whether the air from the air handling equipment is supplied to the cooling channel or to the evaporating channel of the relevant indirect evaporative cooler and such whether it concerns fresh air or recirculated air. An advantage of the system according to the invention is thereby, that it can be designed flexibly per space or number of spaces.

In yet another embodiment of the air treatment system according to the invention, the drying device of the air handling equipment is connected for medium throughflow to an inflow opening of the cooling channel of an or each indirect evaporative cooler, wherein the air intake section is connected for medium throughflow to an inflow opening of the cooling channel of that or each indirect evaporative cooler, wherein an outflow opening of the cooling channel is connected for medium throughflow to an inflow opening of the evaporating channel for the supply of a part of the in the cooling channel cooled air to the evaporating channel and an air outflow section debouching into the building for supplying another part of the in the cooling channel cooled air to the building. In such an embodiment the indirect evaporative cooler is a so called dew point cooler. By supplying cool air of relatively low enthalpy to the evaporating channel, cooling can take place to a lower temperature, namely down to the dew point temperature instead of the wet bulb temperature. Hereby the cooling of the building can take place efficiently, despite of that a part of the cooled air is used for the cooling itself in the evaporating channel by the evaporation of the moist. The other part of the in the cooling channel cooled air is supplied to the building for cooling the building. To do this the dew point cooler can contain means for controlling or regulating the two air streams, for example a valve. The air coming from the building is in this embodiment supplied to the cooling channel, wherein mixing with fresh air from outside takes place, and after that is partially supplied back to the building. An advantage of reusing the air from the building for the cooling of the building, is that the air has already before been among others dehumidified by the air handling equipment, which does not have to take place again. Also the air can be of a lower temperature than the fresh air from outside. Hereby energy can be saved compared to the above described known system, wherein air from the building is not reused. Reusing air is with the system according to the invention possible, because the air is locally reused. Hereby air from one space is not supplied to another space, wherein possible bacteria or other contaminants would also be transported to the other space. The moist air from the evaporating channel is here too discharged to outside, as desired locally or through a joint discharge channel.

In yet another embodiment of the air treatment system according to the invention the drying device of the air handling equipment is connected for medium throughflow to an inflow opening of the cooling channel of an or each indirect evaporative cooler, wherein the system furthermore contains control means, for example valves, for controlling of a medium throughflowing connection of the air intake section between an inflow opening of the evaporating channel or an inflow opening of the cooling channel, and for controlling of a medium throughflowing connection of the outflow opening of the cooling channel between an air outflow section debouching into the building and/or an inflow opening of the evaporating channel for supplying a part of the in the cooling channel cooled air to the evaporating channel. Such an embodiment of the system according to the invention offers the advantage that the indirect evaporative cooler can both function as a dew point cooler when cooling is desired, or can function as a heat exchanger when heat recovery is desired. The control means are controlled in such a way, that for cooling, the air intake section is connected for medium throughflow to the inflow opening of the cooling channel, wherein the outflow opening of the cooling channel is connected for medium throughflow to the inflow opening of the evaporating channel for supplying part of the in the cooling channel cooled air to the evaporating channel. The outflow opening of the cooling channel is also connected for medium throughflow to the air outflow section debouching into the building for supplying the other part of the in the cooling channel cooled air to the building. The indirect evaporative cooler then functions as the dew point cooler as described above.
For heat recovery the air intake section is connected for medium throughflow to the inflow opening of the evaporating channel and the outflow opening of the cooling channel is connected for medium throughflow to the air outflow section debouching into the building. Hereby as described earlier above the means for wetting are switched off temporarily, such that the relatively warm air from the building can heat the relatively cold fresh outside air through the transfer wall. With the aid of this system according to the invention the efficiency of a dew point cooler can be used when cooling and when heating make use of heat recovery. It is noted that the drying device can be connected for medium throughflow to the local indirect evaporative coolers both directly as indirectly through other devices, such as a possible air filter or a possible central indirect evaporative cooler. For switching between cooling and heat recovery it is as described above advantageous when the system contains control means for controlling independently from each other the means for wetting of each indirect evaporative cooler. Such control means can be alternatively or additionally advantageous for controlling the degree of cooling of each indirect evaporative cooler. Bij adding more moist, the degree of cooling will be higher and vice versa. This allows for easily locally controlling the temperature of the cooled air. When the temperature of the warm inside air is not sufficient for heating the relatively cold outside air when the indirect evaporative cooler is used for heat recovery, each indirect evaporative cooler can contain heating means for heating the air from the cooling channel. With the aid of the heating means, the air from the cooling channel can be reheated to a locally desired degree. It is noted that when the indirect evaporative cooler is used for heat revovery, the cooling channel is a heating channel and the evaporating channel is a heat transfer channel.

In yet another embodiment of the air treatment system according to the invention the system includes (second) control means, for example valves, for independently from each other controlling an airstream from the air handling equipment to each indirect evaporative cooler. With the aid of such second control means, which second control means can be the first control means when the in this text indicated first control means are not provided, for example when the dew point cooler does not need to function as a heat exchanger, for example in a continuously warm climate, the amount of fresh supply air and thereby the amount of cooling and possibly heating, can be controlled simply locally. It is evident from this that the second control means are only indicated as second control means to differentiate with the other, first control means, but that it can be that these second control means are the only control means. If desired the system can contain even other, not explicitly described control means, besides the as first and second indicated control means.

In yet another embodiment of the system according to the invention the drying device contains a sorption material with a low regeneration temperature. When the sorption material is at least almost saturated, it will be regenerated by supplying heat to it. It is advantageous when the regeneration temperature is relatively low, especially lower than 100°C, because then this costs relatively little energy. Preferably the sorption material is a polymer with a lower critical solution temperature (LCST polymer). The LCST polymer is for example chosen from the group comprising polyoxazoline, poly(dimethylamino ethyl methacrylaat) (pDMAEMa) and poly(N-isopropylacrylamide)
(pNiPAAm).

The invention will be further elucidated with reference to figures shown in a drawing, in which:
Figure 1 shows schematically an air treatment system in a building according to the invention;
Figure 2 shows schematically an air treatment system with an indirect evaporative cooler according to a first embodiment of the invention;
Figure 3 shows schematically an air treatment system with an indirect evaporative cooler according to a second embodiment of the invention;
Figure 4 shows schematically an air treatment system with an indirect evaporative cooler according to a third embodiment of the invention; and
Figure 5A and 5B show schematically an air treatment system with an indirect evaporative cooler according to a fourth embodiment of the invention, wherein figure 5A shows the system for cooling and figure 5B shows the system for heating. In the figures alike elements are indicated with alike reference number.

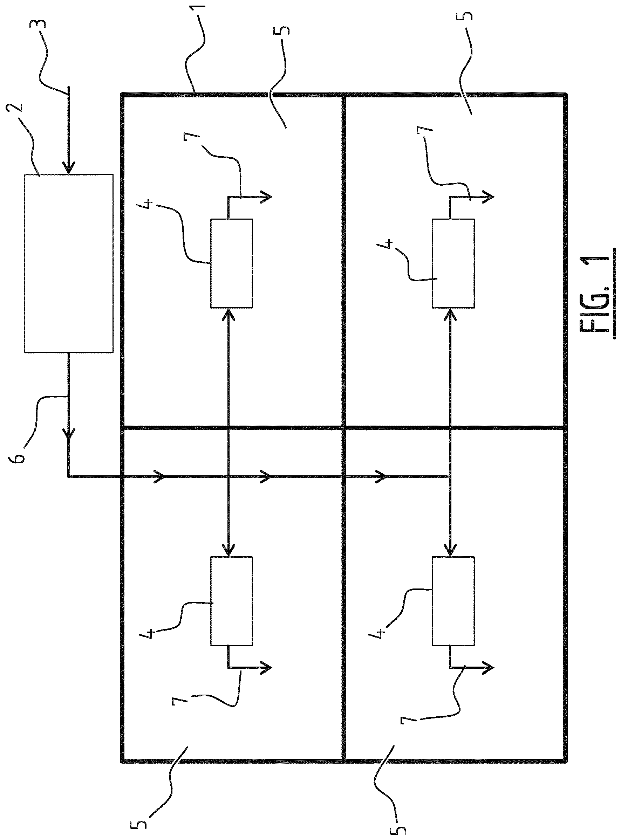

Figure 1 shows a building 1 with an air treatment system. The system comprises an air handling equipment, here in the form of an air handling unit 2, which in this case is positioned on the roof of the building 1. Alternatively the air handling unit 2 can be positioned in the building. In the air handling unit 2 different devices can be positioned, among which in each case a drying device for the dehumidification of air coming from outside of the building, which air is indicated with arrow 3. For example a fan (not depicted) can be provided for the intake of fresh outside air 3. After dehumidification, the fresh outside air is directed to a number, in this case four, of locally in the building in various spaces 5 positioned indirect evaporative coolers 4, which air streams are indicated with arrows 6. The spaces 5 from figure 1 can be spaces permanently mutually closed, but can alternatively also be mutually closable spaces. The four indirect evaporative coolers 4 are each connected in parallel to each other to the drying device 2, wherein the air stream from the drying device 2 is distributed as desired among the indirect evaporative coolers 4. Not depicted in this schematic overview is that each indirect evaporative cooler 4 comprises two air channels separated from each other by a transfer wall, wherein a first air channel is a cooling channel and wherein a second channel is an evaporating channel, and wherein each indirect evaporative cooler has means for wetting the side of the transfer wall directed towards the evaporating channel. As will be further elucidated below, the air 6 can be supplied to either an evaporating channel or a cooling channel of cooler 4, which can be chosen per cooler 4. The air 7 which is supplied to a space 5 is always air from a cooling channel, which can either be the outside air supplied to cooler 4, or from the space 5 recirculated air. It is noted that in figure 1 one cooler 4 per space 5 is positioned. Each space 5 can potentially contain multiple mutually separated spaces, wherein the cooled air is transported to the various spaces.

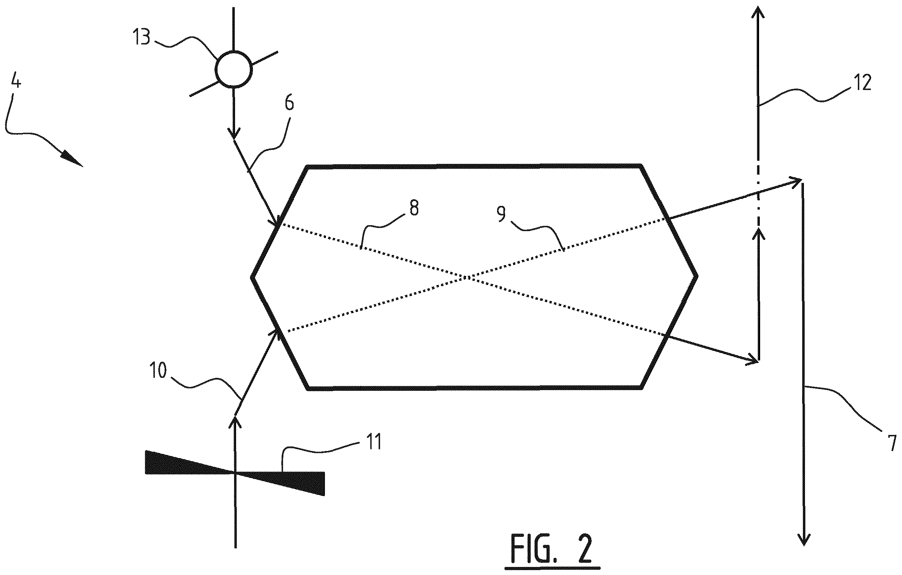

For this a number of air ducts can be provided which connect the cooler 4 to the number of rooms or a part thereof. It is evident that the system according to the invention in this way can be designed flexibly as desired. Figure 2 shows a first embodiment of the system with a certain indirect evaporative cooler 4. In this embodiment, the air stream 6 from the air handling unit 2 is supplied to the evaporating channel 8 from the cooler 4. The outside air evaporates the moisture applied to the transfer wall, such that a through the cooling channel 9 transported airstream 10 is cooled. Subsequently the moist outside air as an airstream 12 is transported to outside. The airstream 10 is coming from the building and is taken in by a fan 11 which is connected for medium throughflow to the cooling channel 9. The cooled airstream 10 is subsequently as airstream 7 transported back to the building. In this embodiment no fresh air is supplied to the building or to a certain space 5 in the building, but there is recirculation of air from the building. The recirculated air is supplied to the same space 5 as where it is taken in from, wherein there is no transfer of bacteria and such between the different spaces 5. The cooler 4 furthermore comprises a valve 13 with the aid of which the amount of to the cooler 4 supplied outside air 6 can be chosen, varying between 0% and 100% of a certain maximum flow rate. The valve 13 can alternatively also be positioned elsewhere or for example be part of the air handling unit 2. The fan 11 can be positioned at any suitable location.

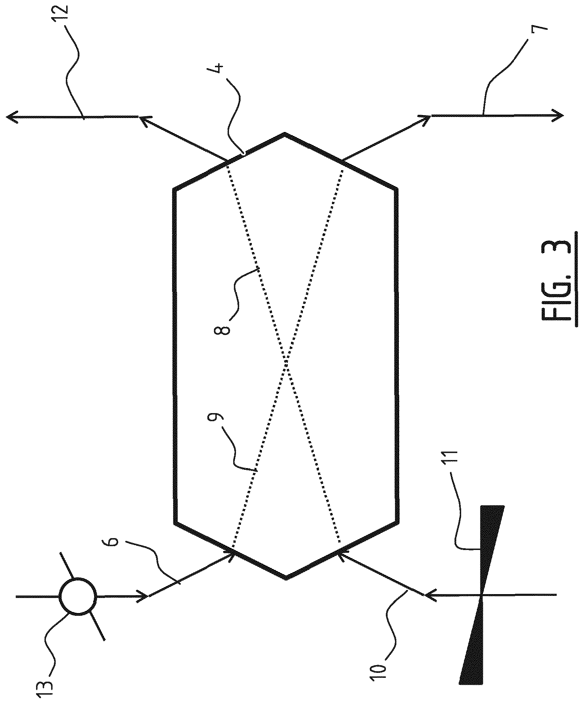

Figure 3 shows a second embodiment of the system with a certain indirect evaporative cooler 4. In this embodiment the the airstream 6 from the air handling unit 2 is supplied to the cooling channel 9 of cooler 4. The airstream from the building 10 is taken in by a fan 11 connected for medium throughflow to the evaporating channel. The airstream 10 evaporates the moisture applied to the transfer wall, such that the through cooling channel 9 directed airstream 6 is cooled. Subsequently the moist air from the evaporating channel 8 as airstream 12 is discharged to outside. The cooled outside air 6 is subsequently as airstream 7 supplied to the building, so that the building is provided with fresh, cool air. The cooler 4 furthermore comprises a valve 13 with which the amount of to cooler 4 supplied outside air 6 can be chosen, varying between 0% and 100% of a certain maximum flow rate. The valve 13 can alternatively also be located elsewhere or for example be part of the air handling unit 2. The fan 11 can be located at any suitable location. The indirect evaporative cooler according to the embodiment of figure 3 can at relatively low outside temperature also be used as a heat recovery heat exchanger. In that case the means for wetting are switched off, such that the air 10 coming from the building can heat the fresh outside air 6 through the not-moist transfer wall. If need be a reheater can be present for reheating the airstream 7 (not depicted here).

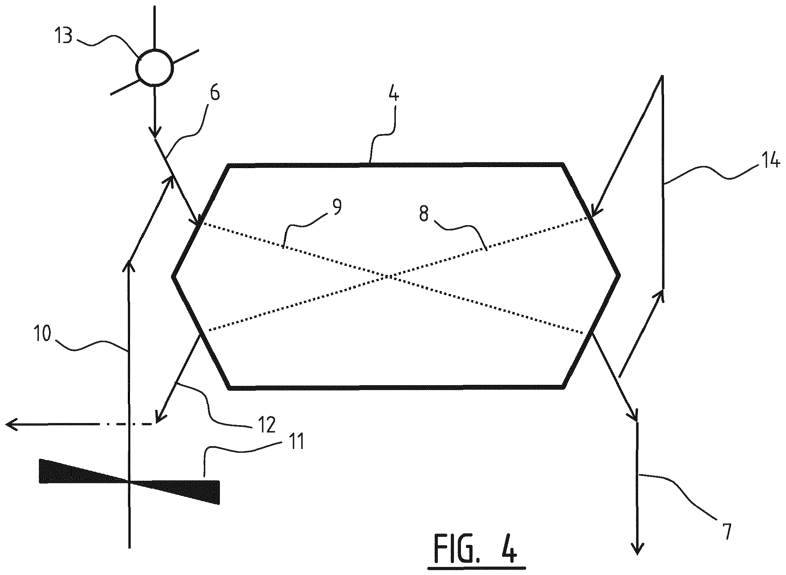

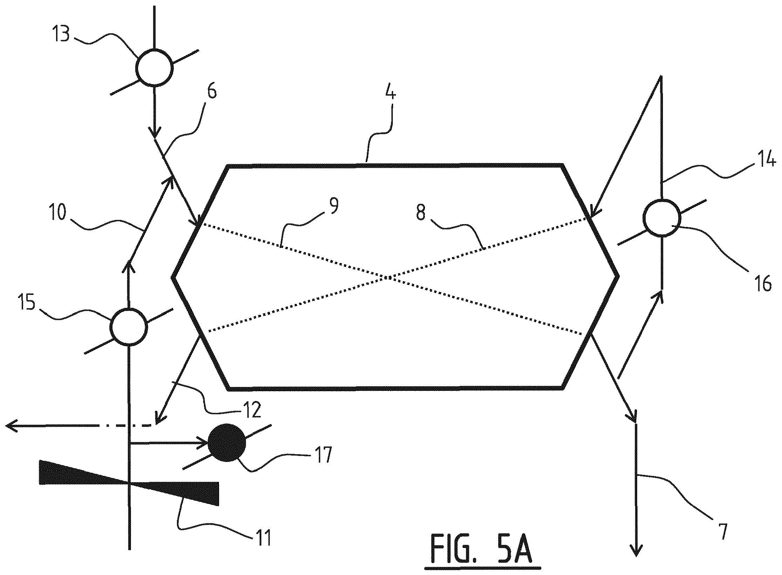

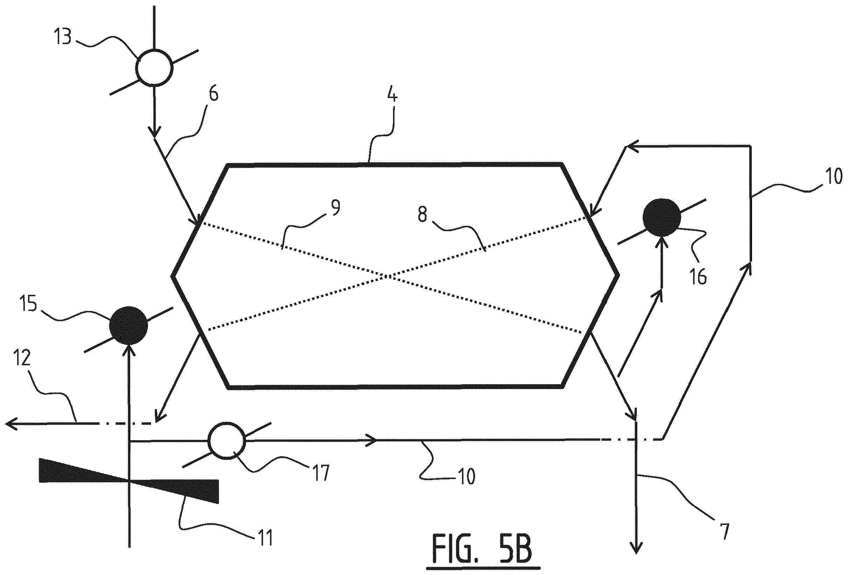

Figure 4 shows a third embodiment of the system with a certain indirect evaporative cooler 4. In this embodiment the airstream 6 coming from air handling unit 2 is supplied to the cooling channel 9 of cooler 4. The airstream 10 coming from the building is taken in by a for medium throughflow to the cooling channel 9 connected fan 11, which airstream 10 is mixed with the airstream 6. The airstreams 6 and 10 are hereby cooled in the cooling channel 9. The cooled combined airstreams 6 and 10 are subsequently partially as airstream 7 supplied to the building, such that the building is provided with both fresh as recirculated cool air, wherein another part is supplied as airstream 14 to the evaporating channel 8. The airstream 14 evaporates the moist in the evaporating channel 8, thereby cooling the combined airstream in cooling channel 9. The moist air from the evaporating channel 8 is subsequently as airstream 12 discharged to outside. The proportion between fresh outside air 6: recirculated air 10 is approximately 1/3: 2/3, and the proportion of to the building supplied airstream 7: airstream 14 is approximately 2/3: 1/3. As desired these proportions can be chosen differently. By directing back a part of the cooled air with relative low enthalpy to the evaporating channel, the indirect evaporative cooler 4 according to this embodiment functions as a dew point cooler. The cooler 4 furthermore comprises a valve 13 with which the amount of outside air 6 to be supplied to cooler 4 can be chosen, varying between 0% and 100% of a certain maximum air flow. The valve 13 can alternatively also be positioned elsewhere or for example be part of the air handling unit 2. The fan 11 can be positioned at any suitable location. The figures 5A and 5B show the dew point cooler 4 from figure 4 with three extra valves 15 - 17. With the aid of valves 15 - 17 the dew point cooler 5 can either function as cooler or as heat recovery heat exchanger. Both situations will be further elucidated below. It is noted that the valves 15 - 17 can be positioned at any suitable location.

Figure 5A shows the cooler 4 with cooling function. Valve 15 is designed to direct the airstream 10 coming from the building to the cooling channel 9 and valve 16 is designed to direct a part of the combined airstreams 6 and 10 from the cooling channel 9 as airstream 14 to the evaporating channel 8. Valve 17 is closed. This way the cooler 4 functions as the dew point cooler according to figure 4, wherein for a full description of figure 5A is referred to the description of figure 4. Figure 5B shows the cooler 4 with heat recovery function. Valve 17 is designed to direct the airstream 10 coming from the building to the evaporating channel 8, and the valves 15 and 16 are each closed. Hereby as described above based on figure 3, the wetting means are switched off, so that the air 10 coming from the building can heat the fresh outside air 6 in the cooling channel 9 through the not-moist transfer wall, which outside air 6 is supplied to the building as airstream 7.

The in the evaporating channel 8 cooled down air 12 is discharged to outside. Possibly a reheater can be present for reheating the to the building supplied airstream 7 (not depicted here). It is noted that the means for wetting for each cooler 4 are controllable independently from each other to control the degree of cooling and/or to switch the function of the cooler to heat recovery heat exchanger. It is noted furthermore that the airstream 10 coming from the building or the to the building supplied airstream 7 can be taken in or supplied in the immediate vicinity of the cooler 4, or that this can alternatively or additionally take place at larger distance through air ducts.

## Claims

1. Air treatment system for a building (1) comprising:
at least two indirect evaporative coolers (4),
each indirect evaporative cooler (4) is comprised of two air channels (8,9) separated from each other by a transfer wall,
wherein a first air channel is a cooling channel (9) and wherein a second channel is an evaporating channel (8), and wherein each indirect evaporative cooler (4) has means for wetting the side of the transfer wall directed towards the evaporating channel (8), **characterised in that** the air treatment system further comprises an air handling equipment (2) with a drying device for the dehumidification of air (3) coming from outside of the building (1), wherein the at least two indirect evaporative coolers (4) are positioned locally in separate, mutually closable, spaces (5) of the building (1) and wherein each of the indirect evaporative coolers (4) is connected in parallel to each other to the air handling equipment (2).

2. Air treatment system as claimed in claim 1, wherein each indirect evaporative cooler (4) comprises an air intake section for taking in air (3) from the building (1).

3. Air treatment system as claimed in claim 2, wherein the drying device of the air handling equipment (2) is connected for medium throughflow to the inflow opening of the evaporating channel (8) of an or each indirect evaporative cooler (4) and wherein the air intake section is connected for medium throughflow to an inflow opening of the cooling channel (9) of an or each indirect evaporative cooler.

4. Air treatment system as claimed in claim 2, wherein the drying device of the air handling equipment (2) is connected for medium throughflow to an inflow opening of the cooling channel (9) of an or each indirect evaporative cooler (4) and wherein the air intake section is connected for medium throughflow to an inflow opening of the evaporating channel (8) of an or each of the indirect evaporative coolers (4)

5. Air treatment system as claimed in claim 2, wherein the drying device of the air handling equipment (2) is connected for medium throughflow to an inflow opening of the cooling channel (9) of an or each indirect evaporative cooler (4), wherein the air intake section is connected for medium throughflow to an inflow opening of the cooling channel (9) of that or each indirect evaporative cooler, and wherein an outflow opening of the cooling channel of that or each indirect evaporative cooler (4) is connected for medium throughflow to an inflow opening of the evaporating channel (8) for supplying a part (14) of the in the cooling channel cooled air to the evaporating channel (8) and an air outflow section debouching into the building for supplying another part (7) of the in the cooling channel cooled air to the building (1).

6. Air treatment system as claimed in claim 2, wherein the drying device of the air handling equipment (2) is connected for medium throughflow to an inflow opening of the cooling channel (9) of an or each indirect evaporative cooler (4), and comprising control means (15, 16, 17) for controlling a connection for medium throughflow of the air intake section between an inflow opening of the evaporating channel (8) or an inflow opening of the cooling channel (9), and for controlling a connection for medium throughflow of an outflow opening of the cooling channel between an air outflow section debouching into the building and/or an inflow opening of the evaporating channel (8) for supplying a part of the in the cooling channel cooled air to the evaporating channel (8).

7. Air treatment system as claimed in any one of the previous claims, comprising control means for independently from each other controlling the wetting means of each indirect evaporative cooler (4).

8. Air treatment system as claimed in claim 7 and claims 4 or 6, wherein each indirect evaporative cooler (4) contains heating means for heating the air coming from the cooling channel.

9. Air treatment system as claimed in any one of the previous claims, comprising (second) control means (13) for the independently from each other controlling of an airstream from the air handling equipment (2) to each indirect evaporative cooler (4).

10. Air treatment system as claimed in any one of the previous claims, wherein the air handling equipment (2) comprises one or more indirect evaporative coolers, that is/are positioned upstream and/or downstream of the drying device.

11. Air treatment system as claimed in any one of the previous claims, wherein the drying device contains a sorption material with a low regeneration temperature.

12. Air treatment system as claimed in claim 11, wherein the sorption material is a polymer with a lower critical solution temperature (LCST polymer).

13. Air treatment system as claimed in claim 12, wherein the LCST polymer is chosen from the group comprising polyoxazoline, poly(dimethylamino ethyl methacrylaat) (pDMAEMa) and poly(N-isopropylacrylamide) (pNiPAAm).

14. Building comprising an air treatment system as claimed in any one of claims 1 - 13.

## Patentansprüche

1. Luftaufbereitungssystem für ein Gebäude (1), das Folgendes aufweist:
mindestens zwei indirekte Verdampfungskühler (4), wobei jeder indirekte Verdampfungskühler (4) aus zwei Luftkanälen (8, 9) besteht, die durch eine Übertragungswand getrennt voneinander sind, wobei ein erster Luftkanal ein Kühlkanal (9) ist und wobei ein zweiter Kanal ein Verdampfungskanal (8) ist und wobei jeder indirekte Verdampfungskühler (4) Mittel zum Befeuchten der Seite der Übertragungswand hat, die hin zu dem Verdampfungskanal (8) gerichtet sind,
**dadurch gekennzeichnet, dass**
das Luftaufbereitungssystem ferner eine Luftbehandlungsausstattung (2) mit einer Trocknungsvorrichtung zur Entfeuchtung von Luft (3), die von außerhalb des Gebäudes (1) kommt, aufweist, wobei die mindestens zwei indirekten Verdampfungskühler (4) lokal in getrennten, jeweils verschließbaren, Räumen (5) des Gebäudes (1) positioniert sind und wobei jeder der indirekten Verdampfungskühler (4) parallel zueinander mit der Luftbehandlungsausstattung (2) verbunden ist.

2. Luftaufbereitungssystem nach Anspruch 1, wobei jeder indirekte Verdampfungskühler (4) einen Lufteinlassabschnitt zum Einlassen von Luft (3) aus dem Gebäude (1) aufweist.

3. Luftaufbereitungssystem nach Anspruch 2, wobei die Trocknungsvorrichtung der Luftbehandlungsausstattung (2) zur Medium-Durchströmung mit der Einströmungsöffnung des Verdampfungskanals (8) eines oder jedes indirekten Verdampfungskühlers (4) verbunden ist und wobei der Lufteinlassabschnitt zur Medium-Durchströmung mit einer Einströmungsöffnung des Kühlkanals (9) eines oder jedes indirekten Verdampfungskühlers verbunden ist.

4. Luftaufbereitungssystem nach Anspruch 2, wobei die Trocknungsvorrichtung der Luftbehandlungsausstattung (2) zur Medium-Durchströmung mit einer Einströmungsöffnung des Kühlkanals (9) eines oder jedes indirekten Verdampfungskühlers (4) verbunden ist und wobei der Lufteinlassabschnitt zur Medium-Durchströmung mit einer Einströmungsöffnung des Verdampfungskanals (8) eines oder jedes der indirekten Verdampfungskühler (4) verbunden ist.

5. Luftaufbereitungssystem nach Anspruch 2, wobei die Trocknungsvorrichtung der Luftbehandlungsausstattung (2) zur Medium-Durchströmung mit einer Einströmungsöffnung des Kühlkanals (9) eines oder jedes indirekten Verdampfungskühlers (4) verbunden ist, wobei der Lufteinlassabschnitt zur Medium-Durchströmung mit einer Einströmungsöffnung des Kühlkanals (9) des oder jedes indirekten Verdampfungskühlers verbunden ist und wobei eine Ausströmungsöffnung des Kühlkanals des oder jedes indirekten Verdampfungskühlers (4) zur Medium-Durchströmung mit einer Einströmungsöffnung des Verdampfungskanals (8) zum Zuführen eines Teils (14) der in dem Kühlkanal gekühlten Luft zu dem Verdampfungskanal (8) verbunden ist und ein Luftausströmungsabschnitt in das Gebäude zum Zuführen eines anderen Teils (7) der in dem Kühlkanal gekühlten Luft zu dem Gebäude (1) mündet.

6. Luftaufbereitungssystem nach Anspruch 2, wobei die Trocknungsvorrichtung der Luftbehandlungsausstattung (2) zur Medium-Durchströmung mit einer Einströmungsöffnung des Kühlkanals (9) eines oder jedes indirekten Verdampfungskühlers (4) verbunden ist, und es Steuerungsmittel (15, 16, 17) zum Steuern einer Verbindung zur Medium-Durchströmung des Lufteinlassabschnitts zwischen einer Einströmungsöffnung des Verdampfungskanals (8) oder einer Einströmungsöffnung des Kühlkanals (9) und zum Steuern einer Verbindung zur Medium-Durchströmung einer Ausströmungsöffnung des Kühlkanals zwischen einem Luftausströmungsabschnitt, der in das Gebäude mündet, und/oder einer Einströmungsöffnung des Verdampfungskanals (8) zum Zuführen eines Teils der in dem Kühlkanal gekühlten Luft zu dem Verdampfungskanal (8) aufweist.

7. Luftaufbereitungssystem nach einem der vorhergehenden Ansprüche, das Steuerungsmittel zum unabhängigen Steuern voneinander der Befeuchtungsmittel jedes indirekten Verdampfungskühlers (4) aufweist.

8. Luftaufbereitungssystem nach Anspruch 7 und Anspruch 4 oder 6, wobei jeder indirekte Verdampfungskühler (4) Heizmittel zum Erwärmen der Luft, die aus dem Kühlkanal kommt, enthält.

9. Luftaufbereitungssystem nach einem der vorhergehenden Ansprüche, das (zweite) Steuerungsmittel (13) zum unabhängigen Steuern voneinander eines Luftstroms von der Luftbehandlungsausstattung (2) zu jedem indirekten Verdampfungskühler (4) aufweist.

10. Luftaufbereitungssystem nach einem der vorhergehenden Ansprüche, wobei die Luftbehandlungsausstattung (2) einen oder mehrere indirekte Verdampfungskühler aufweist, der/die stromaufwärts und/oder stromabwärts von der Trocknungsvorrichtung positioniert ist/sind.

11. Luftaufbereitungssystem nach einem der vorhergehenden Ansprüche, wobei die Trocknungsvorrichtung ein Sorptionsmaterial mit einer niedrigen Regenerationstemperatur enthält.

12. Luftaufbereitungssystem nach Anspruch 11, wobei das Sorptionsmaterial ein Polymer mit einer niedrigen kritischen Lösungstemperatur ist (LCST-Polymer).

13. Luftaufbereitungssystem nach Anspruch 12, wobei das LCST-Polymer aus der Gruppe ausgewählt ist, die Folgendes aufweist: Polyoxazolin, Poly(dimethylamino-Ethyl-Methacrylat) (pDMAEMa) und Poly(N-Isopropylacrylamid) (pNiPAAm).

14. Gebäude, das ein Luftaufbereitungssystem nach einem der Ansprüche 1-13 aufweist.

## Revendications

1. Système de traitement de l'air pour un bâtiment (1) comprenant :
au moins deux dispositifs de refroidissement évaporatif indirect (4), chaque dispositif de refroidissement évaporatif indirect (4) étant composé de deux conduits d'air (8, 9) séparés l'un de l'autre par une paroi de transfert, un premier conduit d'air étant un conduit de refroidissement (9) et un second conduit d'air étant un conduit d'évaporation (8), et chaque dispositif de refroidissement évaporatif indirect (4) comportant des moyens pour humidifier le côté de la paroi de transfert orienté en direction du conduit d'évaporation (8),
**caractérisé en ce que**
le système de traitement de l'air comprend en outre un équipement de conditionnement de l'air (2) comportant un dispositif de séchage servant à la déshumidification de l'air (3) provenant de l'extérieur du bâtiment (1), les au moins deux dispositifs de refroidissement évaporatif indirect (4) étant positionnés localement dans des espaces (5) séparés, pouvant être fermés les uns vis-à-vis des autres, du bâtiment (1) et chacun des dispositifs de refroidissement évaporatif indirect (4) étant raccordé en parallèle à l'équipement de conditionnement de l'air (2).

2. Système de traitement de l'air selon la revendication 1, dans lequel chaque dispositif de refroidissement évaporatif indirect (4) comprend une section d'admission d'air destinée à admettre de l'air (3) provenant du bâtiment (1).

3. Système de traitement de l'air selon la revendication 2, dans lequel le dispositif de séchage de l'équipement de conditionnement de l'air (2) est raccordé, à des fins de circulation de fluide, à l'ouverture d'entrée d'écoulement du conduit d'évaporation (8) d'un ou de chaque dispositif de refroidissement évaporatif indirect (4) et dans lequel la section d'admission d'air est raccordée, à des fins de circulation de fluide, à une ouverture d'entrée d'écoulement du conduit de refroidissement (9) d'un ou de chaque dispositif de refroidissement évaporatif indirect.

4. Système de traitement de l'air selon la revendication 2, dans lequel le dispositif de séchage de l'équipement de conditionnement de l'air (2) est raccordé, à des fins de circulation de fluide, à une ouverture d'entrée d'écoulement du conduit de refroidissement (9) d'un ou de chaque dispositif de refroidissement évaporatif indirect (4) et dans lequel la section d'admission d'air est raccordée, à des fins de circulation de fluide, à une ouverture d'entrée d'écoulement du conduit d'évaporation (8) d'un ou de chaque dispositif de refroidissement évaporatif indirect (4) .

5. Système de traitement de l'air selon la revendication 2, dans lequel le dispositif de séchage de l'équipement de conditionnement de l'air (2) est raccordé, à des fins de circulation de fluide, à une ouverture d'entrée d'écoulement du conduit de refroidissement (9) d'un ou de chaque dispositif de refroidissement évaporatif indirect (4), dans lequel la section d'admission d'air est raccordée, à des fins de circulation de fluide, à une ouverture d'entrée d'écoulement du conduit de refroidissement (9) de ce ou de chaque dispositif de refroidissement évaporatif indirect (4), et dans lequel une ouverture de sortie d'écoulement du conduit de refroidissement de ce ou de chaque dispositif de refroidissement évaporatif indirect (4) est raccordée, à des fins de circulation de fluide, à une ouverture d'entrée d'écoulement du conduit d'évaporation (8) afin de fournir une partie (14) de l'air refroidi dans le conduit de refroidissement au conduit d'évaporation (8) et à une section de sortie d'air débouchant dans le bâtiment afin de fournir une autre partie (7) de l'air refroidi dans le conduit de refroidissement au bâtiment (1).

6. Système de traitement de l'air selon la revendication 2, dans lequel le dispositif de séchage de l'équipement de conditionnement de l'air (2) est raccordé, à des fins de circulation de fluide, à une ouverture d'entrée d'écoulement du conduit de refroidissement (9) d'un ou de chaque dispositif de refroidissement évaporatif indirect (4), et comprenant des moyens de commande (15, 16, 17) servant à commander un raccordement, à des fins de circulation de fluide, de la section d'admission d'air entre une ouverture d'entrée d'écoulement du conduit d'évaporation (8) ou une ouverture d'entrée d'écoulement du conduit de refroidissement (9), et servant à commander un raccordement, à des fins de circulation de fluide, d'une ouverture de sortie d'écoulement du conduit de refroidissement entre une section de sortie d'écoulement d'air débouchant dans le bâtiment et/ou une ouverture d'entrée d'écoulement du conduit d'évaporation (8) afin de fournir une partie de l'air refroidi dans le conduit de refroidissement au conduit d'évaporation (8).

7. Système de traitement de l'air selon l'une quelconque des revendications précédentes, comprenant des moyens de commande servant à commander, de manière indépendante l'un vis-à-vis de l'autre, les moyens d'humidification de chaque dispositif de refroidissement évaporatif indirect (4) .

8. Système de traitement de l'air selon la revendication 7 et les revendications 4 ou 6, dans lequel chaque dispositif de refroidissement évaporatif indirect (4) contient des moyens de chauffage servant à chauffer l'air provenant du conduit de refroidissement.

9. Système de traitement de l'air selon l'une quelconque des revendications précédentes, comprenant des (seconds) moyens de commande (13) servant à commander, de manière indépendante l'un vis-à-vis de l'autre, un courant d'air allant de l'équipement de conditionnement de l'air (2) à chaque dispositif de refroidissement évaporatif indirect (4).

10. Système de traitement de l'air selon l'une quelconque des revendications précédentes, dans lequel l'équipement de conditionnement de l'air (2) comprend un ou plusieurs dispositifs de refroidissement évaporatif indirect, qui est/sont positionné(s) en amont et/ou en aval du dispositif de séchage.

11. Système de traitement de l'air selon l'une quelconque des revendications précédentes, dans lequel le dispositif de séchage contient un matériau de sorption présentant une faible température de régénération.

12. Système de traitement de l'air selon la revendication 11, dans lequel le matériau de sorption est un polymère présentant une température critique de solubilité inférieure (polymère LCST) .

13. Système de traitement de l'air selon la revendication 12, dans lequel le polymère LCST est choisi dans le groupe comprenant la polyoxazoline, le poly(méthacrylate de diméthylaminoéthyle) (pDMAEMa) et le poly(acrylamide de N-isopropyle) (pNiPAAm) .

14. Bâtiment comprenant un système de traitement de l'air selon l'une quelconque des revendications 1 à 13.
